(19) Europäisches Patentamt
European Patent Office
Office européen des brevets

(11) **EP 4 773 598 A1**

(12) **EUROPEAN PATENT APPLICATION**

(43) Date of publication:
08.07.2026 Bulletin 2026/28

(21) Application number: 25305005.8

(22) Date of filing: 03.01.2025

(51) International Patent Classification (IPC):
$H04N\ 19/105^{(2014.01)}$      $H04N\ 19/176^{(2014.01)}$
$H04N\ 19/52^{(2014.01)}$      $H04N\ 19/593^{(2014.01)}$

(52) Cooperative Patent Classification (CPC):
H04N 19/593; H04N 19/105; H04N 19/176;
H04N 19/52

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• RADOSAVLJEVIC, Milos
35000 RENNES (FR)
• LE LEANNEC, Fabrice
35830 BETTON (FR)
• CHEN, Ya
35700 RENNES (FR)
• BALCILAR, Muhammet
35830 BETTON (FR)

(74) Representative: Vossius & Partner
Patentanwälte Rechtsanwälte mbB
Siebertstraße 3
81675 München (DE)

(54) **INTRA TEMPLATE MATCHING PREDICTION FUSION**

(57) Systems, methods, and instrumentalities are configured for intra template matching prediction fusion. In examples, a device (e.g., a video encoding and/or decoding device) may be configured to obtain, for a video block, a block vector (BV) candidate of a first fusion set. The device may compare a template matching (TM) cost of the BV candidate to a threshold associated with a first fusion set. The device may, based on the comparison, determine to bypass the BV candidate from the first fusion set. The device may determine a fused prediction block based on the first fusion set, a second fusion set, and the bypassed BV candidate. The device may decode the video block based on the fused prediction block.

**Fusion set0**

| Index | BV | SAD |
|---|---|---|
| 0 | $BV_0$ | 969 |
| 1 | $BV_1$ | 1153 |
| 2 | $BV_2$ | 1606 |
| 3 (unused) | $BV_3$ | 1975 |
| 4 (unused) | $BV_4$ | 2160 |

**Fusion set1**

| Index | BV | SAD |
|---|---|---|
| 5 | $BV_5$ | 2250 |
| 6 | $BV_6$ | 2278 |
| 7 | $BV_7$ | 2410 |
| 8 | $BV_8$ | 2496 |
| 9 | $BV_9$ | 2570 |

**Fusion set2**

| Index | BV | SAD |
|---|---|---|
| 10 | $BV_{10}$ | 2635 |
| 11 | $BV_{11}$ | 2834 |
| 12 | $BV_{12}$ | 2887 |
| 13 | $BV_{13}$ | 3140 |
| 14 (unused) | $BV_{14}$ | 3299 |

**Calculate fusionNum using SAD-based threshold**

**Fusion information for set0**
- fusionNum: 3
- Fusion BVs: $\{BV_0, BV_1, BV_2\}$

**Fusion information for set1**
- fusionNum: 5
- Fusion BVs: $\{BV_5, BV_6, BV_7, BV_8, BV_9\}$

**Fusion information for set2**
- fusionNum: 4
- Fusion BVs: $\{BV_{10}, BV_{11}, BV_{12}, BV_{13}\}$

**FIG. 9**

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are configured for intra template matching prediction fusion. In examples, a device (e.g., a video encoding and/or decoding device) may be configured to obtain, for a video block, a block vector (BV) candidate of a first fusion set. The device may compare a template matching (TM) cost of the BV candidate to a threshold associated with a first fusion set. The device may, based on the comparison, determine to bypass the BV candidate from the first fusion set. The device may determine a fused prediction block based on the first fusion set, a second fusion set, and the bypassed BV candidate (e.g., the bypassed BV candidate may be included in the second fusion set). The device may decode the video block based on the fused prediction block.

The BV candidate may be a first BV candidate. The device may obtain, for the video block, a second BV candidate. The device may compare a TM cost of the second BV candidate to the threshold associated with the first fusion set. The device may, based on the TM cost of the second BV candidate being less than the threshold associated with the first fusion set, determine to retain the second BV candidate of the first fusion set for the first fusion set. Bypassing the first BV candidate may be determined based further on the determination to retain the second BV candidate of the first fusion set (e.g., the first BV candidate may be bypassed based on (after) retaining (e.g., determining to retain) the second BV candidate of the first fusion set).

The device may add the BV candidate bypassed from the first fusion set to the second fusion set, and the fused prediction block may be determined based on at least one or more of the first fusion set or the second fusion set having the BV candidate bypassed from the first fusion set.

Based on the determination to bypass the BV candidate from the first fusion set, the device may determine a threshold associated with the second fusion set based on the TM cost associated with the BV candidate bypassed from the first fusion set. The device may compare a third BV candidate to the threshold associated with the second fusion set. The device may determine to retain the third BV candidate for the second fusion set based on the comparison. The fused prediction block may be determined based on at least one or more of the first fusion set and the second fusion set having the third BV candidate.

Based on the determination to bypass the BV candidate from the first fusion set, the device may determine a threshold associated with the second fusion set based on the TM cost associated with the BV candidate bypassed from the first fusion set. The device may compare a third BV candidate to the threshold associated with the second fusion set. The device may determine to bypass the third BV candidate for the second fusion set based on the comparison. The fused prediction block may be determined based on at least one or more of the first fusion set and the second fusion set having the third BV candidate bypassed from the second fusion set.

The device may determine a maximum size of the first fusion set, wherein the determination to bypass the BV candidate from the first fusion set is based further on the maximum size of the first fusion set.

The device may determine a maximum size of the second fusion set. The device may determine to bypass a BV candidate from the second fusion set based on the maximum size of the second fusion set. The device may determine to add the BV candidate bypassed from the second fusion set to a third fusion set. The fused prediction block may be based further on the third fusion set having the BV candidate bypassed from the second fusion set. The device may select a fusion set based on an indication indicating the selected fusion set. The selected fusion set may be selected among the first fusion set, the second fusion set, or a third fusion set. The fused prediction block may be determined based on the indication.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 shows an example intra template matching search area used.

FIG. 5 shows an example sparse search and refinement in an example intra template matching prediction (ITMP) search process.

FIG. 6 shows an example workflow of an ITMP process.

FIG. 7 shows an example of an ITMP auto relocated block vector prediction's (ITMP-AR-BVP) construction.

FIG. 8 shows an example of five positions in a reference block.

FIG. 9 shows an example of block vector filtering in ITMP fusion.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

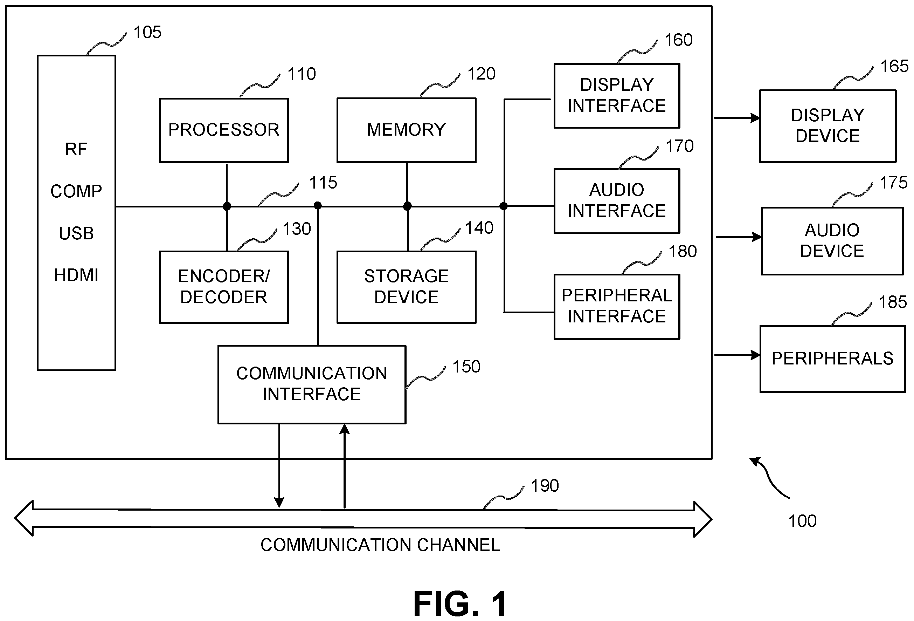

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

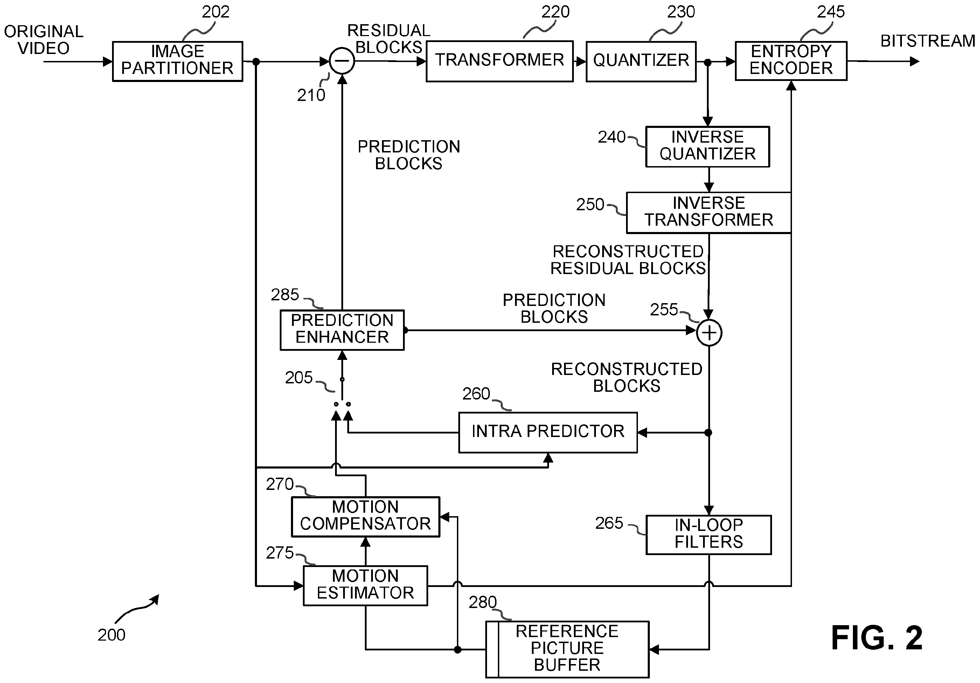

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

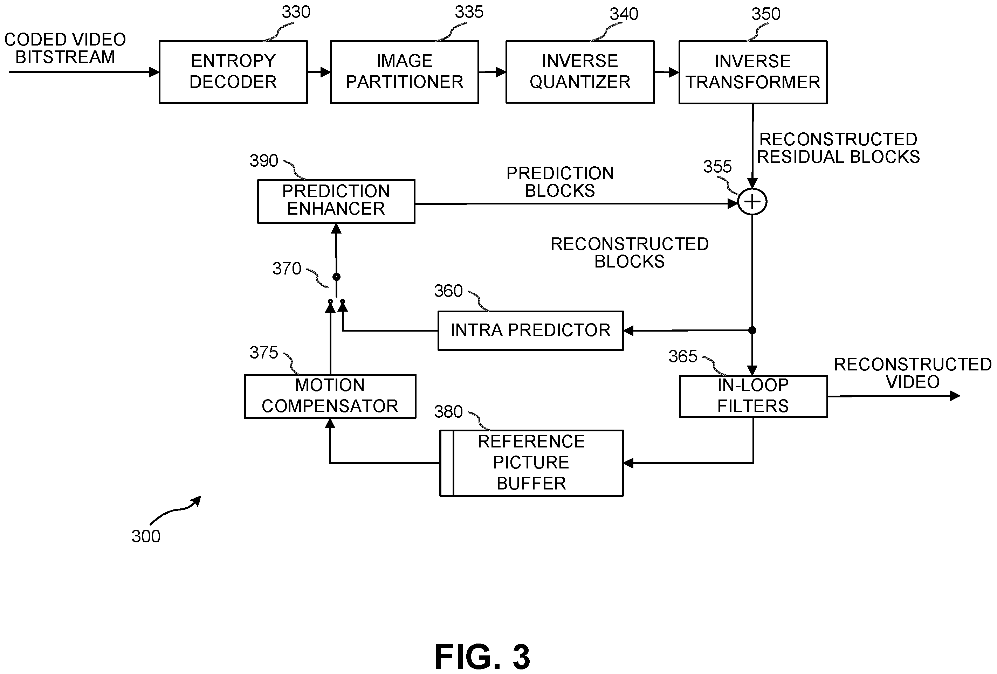

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are configured for intra template matching prediction fusion. In examples, a device (e.g., a video encoding and/or decoding device) may be configured to obtain, for a video block, a block vector (BV) candidate of a first fusion set. The device may compare a template matching (TM) cost of the BV candidate to a threshold associated with a first fusion set. The device may, based on the comparison, determine to bypass the BV candidate from the first fusion set. The device may determine a fused prediction block based on the first fusion set, a second fusion set, and the bypassed BV candidate (e.g., the bypassed BV candidate may be included in the second fusion set). The device may decode the video block based on the fused prediction block.

The BV candidate may be a first BV candidate. The device may obtain, for the video block, a second BV candidate. The device may compare a TM cost of the second BV candidate to the threshold associated with the first fusion set. The device may, based on the TM cost of the second BV candidate being less than the threshold associated with the first fusion set, determine to retain the second BV candidate of the first fusion set for the first fusion set. Bypassing the first BV candidate may be determined based further on the determination to retain the second BV candidate of the first fusion set. In an example, the first BV candidate may be bypassed based on (e.g., after) retaining the second BV candidate of the first fusion set.

The device may add the BV candidate bypassed from the first fusion set to the second fusion set, and the fused prediction block may be determined based on at least one or more of the first fusion set or the second fusion set having the BV candidate bypassed from the first fusion set.

Based on the determination to bypass the BV candidate from the first fusion set, the device may determine a threshold associated with the second fusion set based on the TM cost associated with the BV candidate bypassed from the first fusion set. The device may compare a third BV candidate to the threshold associated with the second fusion set. The device may determine to retain the third BV candidate for the second fusion set based on the comparison. The fused prediction block may be determined based on at least one or more of the first fusion set and the second fusion set having the third BV candidate.

Based on the determination to bypass the BV candidate from the first fusion set, the device may determine a threshold associated with the second fusion set based on the TM cost associated with the BV candidate bypassed from the first fusion set. The device may compare a third BV candidate to the threshold associated with the second fusion set. The device may determine to bypass the third BV candidate for the second fusion set based on the comparison. The fused prediction block may be determined based on at least one or more of the first fusion set and the second fusion set having the third BV candidate bypassed from the second fusion set.

The device may determine a maximum size of the first fusion set, wherein the determination to bypass the BV candidate from the first fusion set is based further on the maximum size of the first fusion set.

The device may determine a maximum size of the second fusion set. The device may determine to bypass a BV candidate from the second fusion set based on the maximum size of the second fusion set. The device may determine to add the BV candidate bypassed from the second fusion set to a third fusion set. The fused prediction block may be based further on the third fusion set having the BV candidate bypassed from the second fusion set. The device may select a fusion set based on an indication indicating the selected fusion set. The selected fusion set may be selected among the first fusion set, the second fusion set, or a third fusion set. The fused prediction block may be determined based on the indication.

A computer-readable medium may include instructions for causing one or more processors to perform a method of examples described herein.

A computer program product which is stored on a non-transitory computer readable medium may include program code instructions for implementing steps of a method according to examples described herein when executed by a processor.

Video data may include information representative of a video block that is processed (e.g., encoded and/or decoded) according to a method of examples described herein.

Features described herein may be associated with intra template matching prediction (ITMP) mode. ITMP may be an intra prediction mode that copies a prediction block from the reconstructed part of the current frame, which has an L-shaped template that matches a current template. For a predefined search range, the encoder may search for the most similar template to the current template in a reconstructed part of the current frame and use the corresponding block as a prediction block. The encoder may signal the usage of the mode, and the prediction operation described herein may be performed at the decoder side.

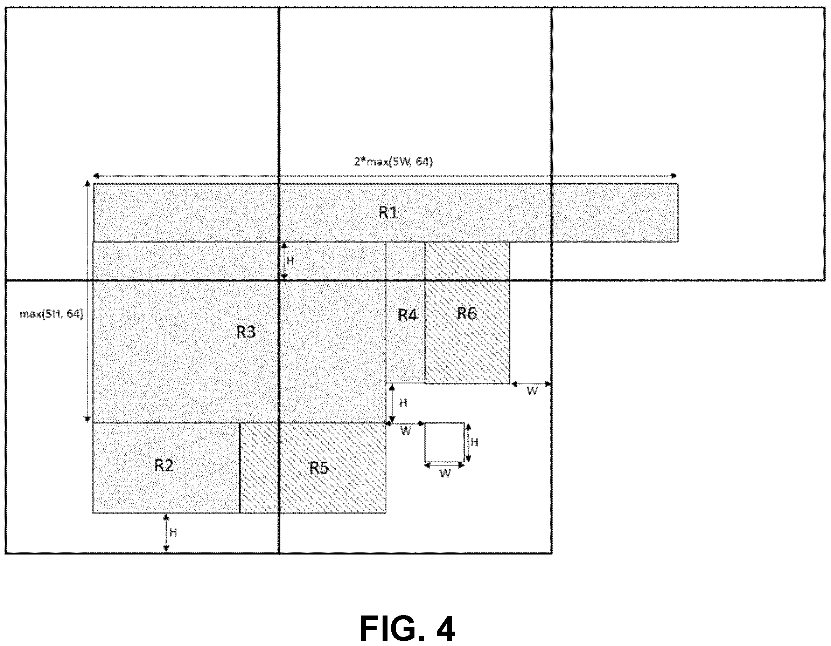

The prediction signal may be generated by matching the L-shaped, top-only or left-only causal neighbor of the current block with a block in a predefined search area in FIG. 4. There may be 6 predefined search areas, e.g., R1 to R6 in FIG. 4, which may include the reconstructed samples from the top and left coding tree units (CTUs) and part of the reconstructed samples within the current CTU that are located above, left, bottom-left and top-right to the current block.

Sum of absolute differences (SAD) may be used as a cost function. A given search order of 6 regions may be utilized, e.g., R4, R5, R6, R1, R2, and R3. The decoder may construct a candidate list of template matching block vectors (BVs). The BVs may be ranked in ascending order according to the template cost. The following modes are supported.

The supported mode may include a single predictor. A single predictor may be selected from the candidate list. The supported mode may include a fusion of multiple predictors. Multiple predictors may be blended to derive the final prediction block. The blending weights may be computed from the template matching cost of each predictor, or with Wiener-filter based weight derivation method.

The supported mode may include sub-pel precision. When single predictor is used, sub-pel precisions may be supported. An updated candidate list may be constructed by including the selected integer block vector and surrounding 1/2-pel and 1-4-pel sub-pel positions. The list may be sorted based on the same cost function used for the integer BV search. The first two candidates may be allowed to be selected with a (e.g., one) single flag being signaled from encoder to decoder.

The supported mode may include a linear filter model. A linear filter may be learned between the reference template and current template and be applied the linear model to reference block. The mode may be used for single predictor, for example, when sub-pel precision is not used.

The supported mode may include an ITMP extension to local illumination compensation (LIC) (ITMP-LIC), decoder-side intra mode derivation (DIMD) (ITMP-DIMD) and spatial geometric partition mode (SGPM) (ITMP-SGPM). The supported mode may include intra template matching prediction (ITMP) extension to template-based intra mode derivation (TIMD).IntraTMP with local illumination compensation may be supported. The following may be considered. Usages of LIC and FLM (e.g., CCCM-like filtering) may be mutually exclusive for a given CU. Usages of LIC together with fusion in intra TMP may be allowed. Top-only and Left-only template usage for LIC model determination may be allowed for screen content coding. For camera-captured coding, the top-left template may be employed. Multi Mode Linear Model (MMLM) may be supported (e.g., similar to IBC-LIC), for screen content coding. When LIC is used for a given CU, the Intra TMP search process may employ mean-removed SAD (MRSAD) rather than SAD distortion function. Based on LIC being used for a given CU in the ITMP search process, the position of the pixel at the top-left of a candidate reconstructed block may be shifted by half the search sampling factor vertically and horizontally with respect to the associated position in non-LIC. For a candidate reconstructed block with a top-left pixel having a shifted position, if the horizontal/vertical shift causes this candidate reconstructed block to go out of the bounds of the ITMP search region, the horizontal/vertical shift may be canceled.

The dimensions of regions (SearchRange_w, SearchRange_h) may be set proportional to the block dimension (BlkW, BlkH) to have a fixed number of SAD comparisons per pixel. The dimensions of regions may include the following:

$$SearchRange\_w = min(64, a * BlkW)$$

$$SearchRange\_h = min(64, a * BlkH)$$

where 'a' is a constant that controls the gain/complexity trade-off. In an example, *'a'* may equal to 5.

FIG. 4 shows an example intra template matching search area used. The complexity of ITMP may be proportional to the template matching process, where the difference between the templates of the current block and of the predicted block is computed for a position (e.g., a BV candidate) within the available search range. To speed-up the template matching process, the search range of search regions may be subsampled, e.g., by a factor of 3 (e.g., sparse search). For example, every third position in horizontal and vertical direction may be tested. Tested positions (e.g., block vectors) in sparse search may be referred to as sparse candidates or sparse BV candidates. Positions/candidates within the sparse search may be tested, their template cost may be calculated, and a refinement process may be performed. The refinement may be done via a second template matching search around the several best candidates as described herein (e.g., sparse search) with a reduced range.

The ITMP tool may be enabled for coding units (CUs) with size less than or equal to 64 in width and height. This maximum CU size for intra template matching may be configurable.

The ITMP may be signaled at a CU level through a dedicated indication (e.g., flag) when DIMD is not used for current CU. That is, if ITMP is used, for example, the remaining intra modes may be inferred to be unused. In examples described herein, a flag and an indication may be used interchangeably.

ITMP may be used for natural and screen content. Multi-candidate ITMP may be used, as described herein. In an example including multi-candidate ITMP, a candidate list may be constructed with the candidate BVs ranked in ascending order of their template matching costs, and the index of the selected candidate may be signaled in the bitstream.

Features described herein may be associated with multi-candidate ITMP. In multi-candidate ITMP, a candidate list may be constructed with the candidate BVs ranked in ascending order of their template matching costs, and the index of selected candidate may be signaled in the bit-stream. Candidate list construction and ranking BVs in ascending order may be based on their template matching costs and may be done as described herein, e.g., sparse searching and refining may be utilized.

ITMP may, for example, select a (e.g., one) candidate, e.g., one block vector (BV) which has the smallest template matching cost. The same process may be performed on the encoder and decoder side, e.g., additional signaling may be associated with indicating the final predictor. In some examples, in camera captured content, the decoder may (or may be unable to) find a match (e.g., a perfect match). Blocks (e.g., several blocks) may be similar to the current block, and their template matching costs may be close. The BV candidate with the smallest template matching cost may not be the best predictor.

Multiple candidates may be used for ITMP. A candidate list may be constructed, and the candidate BVs are ranked in ascending order based on their template matching costs. An index may be signaled in the bit-stream to indicate which candidate BV from the final list is used for the current block.

Template matching may be used to select a shortlist of promising candidates from a (e.g., large) number of possible BVs and allows the encoder, which may refer to the current block, to make the final decision.

The syntax may be as follows:

| ... |
| --- |
| intra_tmp_flag |
| if(intra_tmp_flag) { |
| intra_tmp_idx |
| } |
| ... |

where intra_tmp_flag equals to 1 means that current block uses ITMP and intra_tmp_idxfurther indicates which BV in the candidate BV list will be used to identify the prediction block.

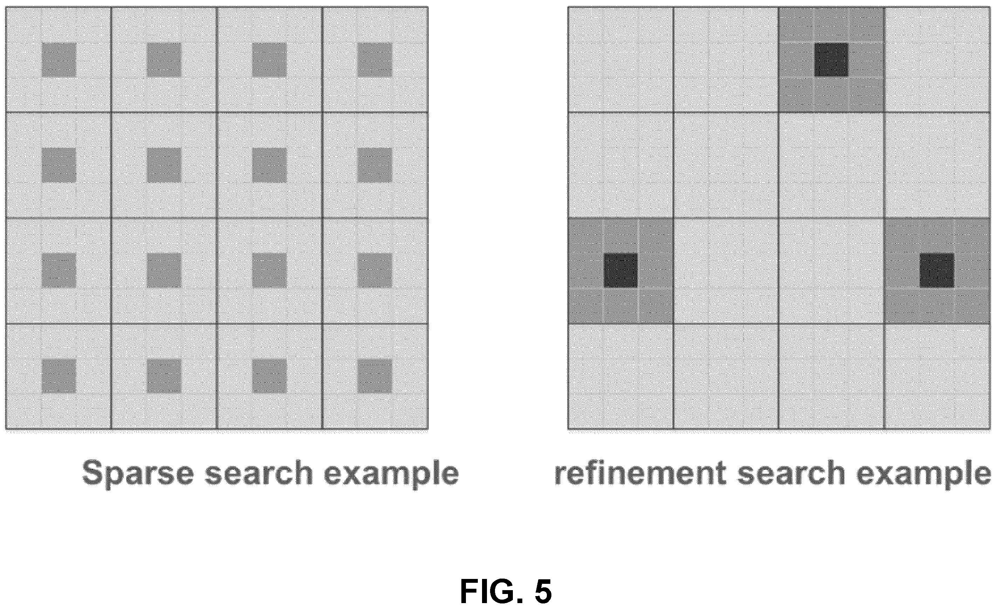

FIG. 5 illustrates a sparse search and refinement in an ITMP search. To build the candidate list, a sparse search and a refinement search may be used as illustrated in FIG. 5. In the sparse search, the sub-sampling factor may be 3 (e.g., every third position in horizontal and vertical direction is tested) (e.g., sparse search). and the top BVs (e.g., the top 30 BVs) may be maintained based on their template matching cost. In the refinement search, a 3x3 block around the 30 BVs may be tested. The top BVs, (e.g., the top 19 BVs) after refinement may be selected to form the final candidate list. One of 19 final candidates may be selected as a final predictor by the encoder and its index may be signaled to the decoder. Search strategies and signaling approaches may be associated with examples described herein.

ITMP syntax may be coded/decoded if DIMD flag is false and if ITMP sps flag is true.

| ... |
| --- |
| intra_tmp_flag |
| if(intra_tmp_flag) { |
| intra_tmp_fusion_flag |
| if(intra_tmp_fusion_flag) { |
| intra_tmp_fusion_idx |
| intra_tmp_lic_flag |
| } else { |
| intra_tmp_idx |
| intra_tmp_filter_flag |
| if(!intra_tmp_filter_flag) { |
| intra_tmp_lic_flag |
| } |
| if(!intra_tmp_filter_flag and !intra_tmp_lic_flag ) { |
| intra_tmp_sub_pel_precision_idx |
| if(intra_tmp_sub_pel_precision_idx != 0) { |
| intra_tmp_sub_pel_direction_idx |
| } |
| } |
| } |
| } |

(continued)

| ... |
| --- |

intra_tmp_flag indicates whether the intra prediction type for current block is ITMP or not.

intra_tmp_fusion_flag indicates whether fusion is used or not for current block.

intra_tmp_fusion_idx specifies the candidate set used for ITMP fusion. The range of intra_tmp_fusion_idx may be 0 to 2, and intra_tmp_fusion_idx may be used to indicate one of the three candidate sets {BV0 to BV4}, {BV5 to BV9}, {BV10 to BV14}.

intra_tmp_lic_flagindicates if ITMP with LIC is used.

intra_tmp_idxspecifies the index of BV in the candidate list used for current block. The range of intra_tmp_idx may be 0 to 18. Candidates from L-shape template, top template and left template may be included in the same candidate list.

intra tmp sub_pel_precision idx specifies the precision index for current block. The range of intra_tmp_sub_pel_precision_idx may be 0 to 3, used to indicate integer-pel precision, 1/2-pel precision, 1/4-pel precision and 3/4-pel precision, respectively.

intra_tmp_sub_pel_direction_idx specifies the sub-pel direction index for current block. The range of intra tmp sub_pel_phase idx may be 0 to 7.

Features described herein may be associated with ITMP with neighboring candidates and ITMP with merge candidates.

Candidates may be added to an ITMP search process by utilizing BVs of surrounding blocks. ITMP may employs an implicit merge mode. Merge candidates may be considered (e.g., without signaling a merge flag or index). The reference positions pointed by the block vectors of the adjacent and non-adjacent merge candidates may be used as additional BV candidates beyond the search areas. In ITMP mode, a template matching search process within pre-defined search regions may be performed to obtain up to 19 candidate BVs. The template matching search process may use sparse search to shorten the most promising candidates to 30 and perform refinement around the 30 candidates to get 19 candidates. The ITMP search may be augmented with updated candidates, e.g., block vectors of neighboring PUs. The updated candidates may be called merge BV candidates or merge candidates or neighbor-based BV merge candidates. Prediction modes may use BVs. The modes may include IBC, ITMP, SGPM, TIMD, and DIMD modes. ITMP may be augmented with BVs from SGPM, DIMD, and TIMD mode. The ITMP may include probable candidates from neighboring blocks during the ITMP search process. The ITMP candidates may be extended to include block vectors (e.g., BV merge candidates, merge candidates).

With respect to the ITMP mode that uses sparse search and refinement, BVs coming from ITMP sparse search and refinement may be tested, as well as BVs coming from outside an ITMP search range, e.g., outside the search range depicted in FIG. 4.

In Intra Block Copy (IBC) merge mode, a merge index may be coded to indicate which neighboring PU block vector is selected. A PU coded in IBC merge mode may utilize selected BVs of the neighboring PUs, which may be better correlated with the current PU.

During IBC merge mode, the ITMP BVs may be used as IBC merge candidates. Using information of neighboring PUs while performing the template matching search for ITMP may lead to improved performance. The template matching cost process to rank the updated candidates among computed candidates, such as those coming from the sparse search, may be used.

The merge candidates may include local and non-local neighboring candidates. Whenever a BV is found within the local or non-local neighborhood of the current PU, the BV may be added to the merge candidates. Merge candidates may be tested after (or before) the sparse candidates. Merge candidates' template cost may be obtained as for other candidates, e.g., sparse candidates. Merge candidates may be ranked together with other candidates based on their template matching cost. The top 30 candidates may be selected for further refinement. By using merge candidates, the top candidates may include candidates that are not part of the sparse search grid.

The top (e.g., top 30) candidates may be refined with template matching, e.g., a second template matching. In examples, refinement of merge candidates may be different than for candidates that come from the native sparse search. For example, one may use 11x11 refinement if a candidate is from the merge candidates.

Candidates that are tested in refinement process may be ranked based on TM cost, and final (e.g., 19) candidates may be selected after refinement. One out of the final candidates may be selected by the encoder and its index may be signaled.

The ITMP candidates include updated BVs that are not (e.g., previously) tested by ITMP process. For example, IBC block vectors may be included, which have a search region larger than the ITMP block vector(s), and because the IBC block vectors may include candidates that are not part of the sparse search candidates. The added BVs may be correlated with the current block statistics, as they may have been selected for predicting nearby blocks.

The merge candidates may be enriched by adding more candidates from the blocks (e.g., blocks coded in IBC or ITMP mode). Bi-prediction IBC candidates may be included. A best-by-cost ITMP candidate may be included in the merge candidates.

For example, if the neighboring PU is coded in Bi-Prediction IBC mode, an additional BV from Bi-Prediction IBC mode may be used and added to the merge candidates. For example, two BVs coming from a PU coded in Bi-Prediction IBC mode may be added to the merge candidates.

Also, if the neighboring PU is coded in ITMP mode, a BV that is selected for the PU may be added to the merge candidates. The BV may be indicated by the ITMP index (intra_tmp_idx). The BV may not be the one with the smallest template cost. If intra_tmp_idx is larger than 0, the BV with the smallest template cost may be included, e.g., the candidate with the intra_tmp_idx equal to 0 (e.g., the candidate which is the first in the list of 19 final candidates).

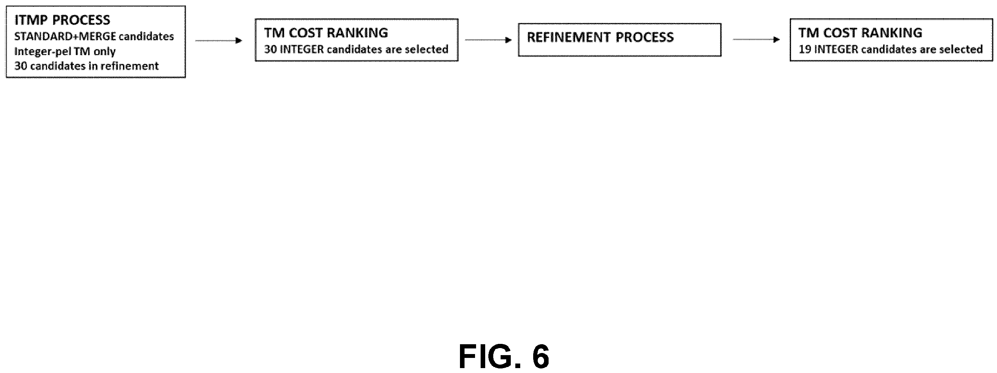

FIG. 6 shows an example workflow of an ITMP process. To maintain a computational cost within a limit, a pre-selection of the merge candidates may be applied. Pre-selection may be applied prior to template cost calculations, e.g., candidates may be discarded prior to template matching cost computations to reduce complexity. Pre-selection may be done in a way that coding gain is not significantly degraded when compared by utilizing all available merge candidates. For example, N out of M available merge candidates may be used if M>N. If M<=N, M available candidates (e.g., all available M candidates) may be used.

In examples, merge candidates that are located outside of the ITMP search region (referring back to FIG. 4) may be prioritized when using merge candidates. Merge candidates may be reordered based on their position, e.g., those outside ITMP search region may be placed first in the processing order, and up to 10 candidates may be tested (N=10).

A refinement process may be done for the best 30 candidates selected by using template matching cost. A refinement may be used for candidates coming from sparse search (e.g., as in native ITMP), and candidates coming from merge candidates. The refinement for the candidates coming from sparse search may use 3x3 refinement. The refinement for the candidates coming from merge candidates may use 11x11 refinement around the candidate.

Refinement may be implemented such that there is a 3x3 refinement process if the merge candidate is within the ITMP search region (e.g., one of the regions illustrated in FIG. 4) and, for example, 11x11 refinement if the merge candidate is located outside the ITMP search region.

In examples, merge candidates coming from an IBC block may have 11x11 refinement regions, and merge candidates coming from an ITMP neighboring block may use 3x3 refinement regions regardless of their position relative to the ITMP search region. A 3x3 and 11x11 search window size may be used for merge candidates coming from an ITMP neighboring block and merge candidates coming from an IBC block respectively, as an example.

Features described herein may be associated with an auto relocated block vector prediction (AR-BVP). Auto relocated block vector prediction (AR-BVP) may be introduced into BVs merge candidate construction. AR-BVP may be derived as a guiding BV plus a BV of a reference block, located by the guiding BV. The initial guiding BV may be set to be an existing BV that is in merge candidates. In examples, up to 20 auto-relocated block vector prediction (AR-BVP) candidates may be constructed to get more merge candidates. An AR-BVP process may be performed after merge candidates are collected from neighboring blocks. AR-BVP candidates may be generated (e.g., up to 20 AR-BVP candidates, for example) and added to existing merge candidates.

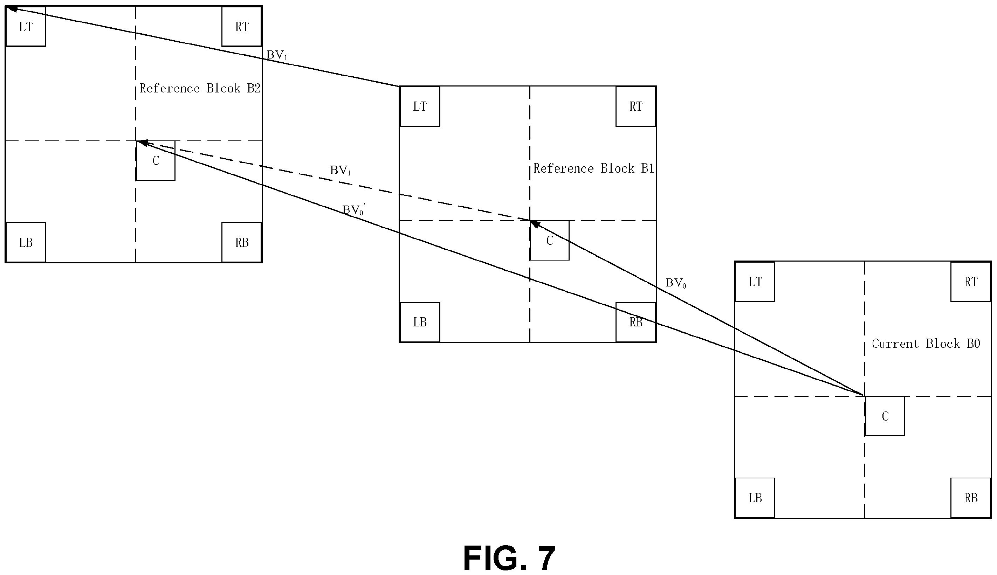

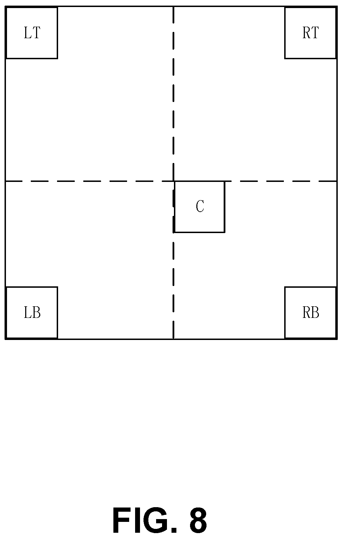

FIG. 7 illustrates an example of ITMP-AR-BVP's construction. FIG. 8 illustrates five example positions in a reference block. As shown in FIG. 7, a guiding block vector BV0 (e.g., an existing BV already part of the merge candidates) associated with the current block B0 may point at a reference block B1. If B1 has a BV denoted as BV1 pointing at a reference block B2, BV0', given by BV0' = BV0 + BV1, may be determined as the AR-BVP. BV1 itself may be directly used as AR-BVP to get available candidates. When deriving AR-BVP, five positions including top-left (e.g., LT in FIG. 8), top-right (e.g., RT in FIG. 8), center (e.g., Ctr in FIG. 8), bottom-left (e.g., LB in FIG. 8), and bottom-right (e.g., RB in FIG. 8) positions of the reference block may be checked to find the reference block's BVs. Both the merge candidates from the neighboring PUs and constructed AR-BVPs may be used as guiding BVs. The construction may be recursively processed until the number of AR-BVPs reaches 20 or no updated AR-BVPs may be constructed.

In an example, up to 20 AR-BVPs may be constructed. If an AR-BVP candidate is selected for refinement, the AR-BVP candidate may have a refinement range of 3x3. The same template matching cost may be used to compare the merge positions and existing positions.

The auto-relocated block vector prediction based on the sparse candidates may be used instead of (or in addition to) auto-relocated block vector prediction based on the merged candidates. The candidates derived from the sparse candidates may be used as guiding BVs to construct AR-BVPs by adding the BVs of the reference blocks. The AR-BVP candidates may be added to the merge candidates.

AR-BVP candidates may be added to the IBC merge and AMVP candidate list after the HMVP candidates. The chained motion vector prediction (CMVP) candidates may be introduced as one of merge candidates and may be inserted after HMVP candidates for merge and TM merge modes. CMVP candidates may be derived as the accumulation of the recursively traced MVs and BVs based on the pre-derived MVs. CMVP candidates may be derived for a merge index and a reference picture list. The traceable reference pictures may be associated with the reference pictures in the reference picture list.

Features described herein may be associated with BVs from HMVP list in merge mode. Merge candidates may be added by using the block vectors from a history-based motion vector prediction (HMVP) list. ITMP BV may be stored for HMVP. Block vectors of HMVP list may be used in IBC mode. The merge candidates may be extended with the HMVP candidate BVs.

Features described herein may be associated with merging (e.g., clustering) candidates and their refinement regions.

Adding merge candidates may improve performance by imposing diversity of the possible BVs to be tested. Such addition of merge candidates may be associated with complexity. ITMP mode may extend the sparse candidates with additional merge candidates acquired from the spatial and non-spatial (local and non-local) neighboring PUs and with AR-BVP candidates and with HMVP candidates. A refinement stage may be carried out using a local search window around selected BV candidates. The refinement window size may vary based on the candidate type. The refinement windows of candidates may overlap with other candidates' refinement windows. Modes, such as SGPM, TIMD and DIMD, may use BV candidates, and refinement may be used. During refinement (e.g., in ITMP), refinement windows may overlap, which may introduce repetitive calculations.

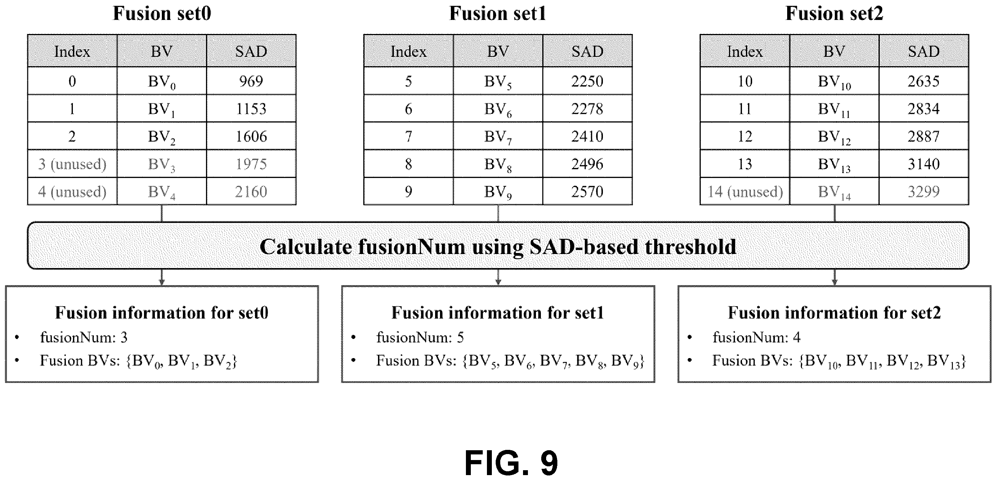

FIG. 9 illustrates and example of a refinement window overlapping. In ITMP mode, the refinement window size for the sparse candidates may be $\pm \frac{SI}{2}$, where *SI* is subsampling factor, e.g., 3 in case of ITMP. Refinement windows of the sparse candidates may, for example, not overlap. By introducing merge and AR-BVP candidates and HMVP candidates, overlap may occur. For example, the refinement window size for the merge BV candidates may be 11x11, and the BV candidates may point in or out of the ITMP search region. The inner merge candidates' refinement window may overlap the sparse candidates' refinement window. The distance between the BV merge candidates may (or may not) be constrained, so the merge's refinement window may overlap.

The refinement window around a BV candidate may vary based on the candidate type: merge candidates may use an 11x11 window size, and AR-BVP, HMVP, and sparse candidates may use a 3x3 window size. The distance between the merge, AR-BVP, HMVP, and sparse candidates may (or may not) be constrained, and the refinement windows may overlap.

ITMP may use an implicit merge mode, Merge candidates may be considered (e.g., without signaling a merge flag or index). The reference positions pointed by the block vectors of the adjacent and non-adjacent merge candidates may be used as additional candidates beyond the default search areas. The reference position of a block vector candidate may be the position or location pointed by the block vector. Using merge BV candidates in ITMP may be extended to prediction modes, such as DIMD, TIMD and SGPM.

The block-vector-based prediction may be used in combination with directional prediction. Block-vector-based prediction may be used with SGPM and may be used with DIMD. In SGPM and DIMD, the merge candidates (e.g., adjacent and non-adjacent) may be evaluated with the template cost to select at least one BV predictor to be combined with the directional modes. Adjacent and non-adjacent blocks may be used to fetch merge candidates, for example, as in ITMP.

When DIMD is applied, five intra modes (e.g., up to five intra modes) may be derived from the reconstructed neighbor samples, and the five predictors may be combined with the non-directional predictor (e.g., planar or BV based predictor) with the weights derived from the histogram of gradients. The block vectors of adjacent and non-adjacent merge candidates (e.g., merge candidates as described herein) may be compared to planar prediction on the reconstructed template. The template cost (e.g., SATD) may be used to select the best predictor among the block vectors and planar mode.

For an intra prediction mode in a most probable mode (MPM) list, and the wide-angle modes if the above-right and/or bottom-left reference samples are available, SATD between the prediction and reconstruction samples of the template may be calculated. The first two intra prediction modes with the minimum SATD and a (e.g., one) non-angular intra prediction mode (e.g., DC or Planar) with the lowest SATD cost may be selected as the TIMD modes. TIMD may benefit from the block vector prediction (e.g., as may benefit SGPM and DIMD modes).

Any of the (e.g., the three) fusion modes of TIMD may be replaced by a block-vector-based prediction, where BV is selected from the merge candidates based on the template cost. The merge candidates of ITMP may be expanded with the auto-relocated block vector prediction. AR-BVP candidates may be used for TIMD and DIMD mode with block vectors.

Features described herein may include a CIIP extension with intra template matching. In CIIP (Combined Intra-Inter Prediction), inter-prediction part may be replaced by the BV. CIIP may be used with intra prediction and allow CIIP in I-slices. CIIP mode may combine intra prediction, for example, like angular intra modes, for example, with a BV-based prediction. Based on CIIP mode being selected, inter and intra predictions may be combined by predefined weights that are based on a prediction type of the neighboring blocks. As CIIP may include inter prediction, CIIP may be applied to non-I slices. CIIP may be used with intra (e.g., intra only) prediction. For example, the inter-part may be replaced by a an intra prediction process, such as BV-based prediction. The use of CIIP may be expanded and provide coding gain to intra slices and an intra coded block. For example, BV candidates from ITMP may be considered, and an index may be signaled to the decoder to indicate a candidate that is used. A fusion of candidates may be described herein. A mode, e.g., spatial CIIP or Intra CIiP, may be signaled inside the intra prediction syntax. The mode may use the same functionality as CIiP, and the inter part may be replaced by BV-based prediction. The intra part may remain unchanged, as well as the computation of weights.

A CIIP process may be used for intra-coded CUs. CIIP may be an inter prediction mode, where the motion compensated prediction is blended with intra prediction. The TIMD derivation may be used to derive the intra prediction mode.

Intra CIIP may be an independent intra mode and signaled at a CU level. Intra CIIP may be used as a mode of ITMP. A syntax element, named IntraCiipFlag, may be signaled as a sub mode of ITMP. Intra CIIP may be allowed based on ITMP fusion, ITMP filtering, and ITMP subpel (e.g., not being applied). Intra CIIP may be a sub mode of ITMP and may be used based on ITMP fusion not being used.

Features described herein may be associated with ITMP fusion. To create a final prediction, BVs may be used and fused together. A prediction may be created as a combination of the prediction blocks determined by at least two block vectors. ITMP fusion may consider fusion using at least two predictors, as described herein.

In ITMP fusion, reference blocks may be blended to derive the final prediction block. The reference blocks (e.g., predictors) may be obtained by block vectors in a template matching search process.

ITMP matched blocks may be derived and fused to produce a predictor. An example ITMP fusion algorithm may include the following:

ITMP search may be performed, which includes sparse search and refinement (e.g., additional candidates may be included, e.g. merge, AR-BVP, HMVP, and candidates may be included in an ITMP search process). The search process may be performed as described herein. After obtaining BV candidates and sorting the candidates by the template matching cost, 3 candidates may be selected for the fusion.

3 final candidates may be compared with the threshold. For the best 3 candidates, a threshold may be used to judge whether the best 3 candidates should be used for fusion.

$$\text{Threshold} = TM\_cost_1 << 1,$$

where << is left shift operation.

$TM\_cost_1$ is the smallest template cost of the 3 best candidates. Candidates with $TM\_cost \leq Threshold$ may be used for fusion, and the number of candidates may be determined. A number of final candidates (e.g., 3 candidate BVs) may be selected for the fusion, and candidates (e.g., remaining candidates) may be discarded. At least one candidate may remain, and the remaining candidate may have the smallest template matching cost.

Fusion weights may be calculated. Once blocks to be fused are decided, the blocked may be fused with weights. The fusion weights may be determined with the fixed weights or with the cost-based weights (e.g. weights are determined based on SAD cost).

Fusion weights are calculated by their SAD. The weights may be calculated as follows:

$$sum = \sum_{i=1}^{n} SAD_i, \quad w_i = \frac{sum - SAD_i}{(n-1) * sum}$$

where n is the number of fusion candidates.

Fixed weights may be used to further reduce the complexity. The weights may be set as $\{w_1, w_2\} = \{\frac{1}{2}, \frac{1}{2}\}$ if two candidates are fused, or $\{w_1, w_2, w_3\} = \{\frac{22}{64}, \frac{21}{64}, \frac{21}{64}\}$ if three candidates are fused.

The final predictor may be determined.

The final fused predictor may be determined by:

$$p_{fusion} = \sum_{i=1}^{n} w_i p_i$$

where $p_i$ is the $i^{th}$ predictor, and n is the number of blocks selected for fusion. In examples where one matched block remains, the final predictor is calculated as

$$p_{fusion} = w_1 p_{TMP} + w_2 p_{intra}$$

where $p_{TMP}$ is the single predictor block and $p_{intra}$ is the intra predictor derived by planar mode. For example, the weights may be set as $w_1$ = 7/8 and $w_2$ = 1/8.

A CU level flag is added to signal whether an ITMP CU is predicted by the fusion method or a non-fusion method, e.g., intra_tmp_fusion_flag. The fusion method may be tested with 5 candidates, for example.

ITMP fusion may apply (e.g., based on one matched block remaining) a fusion between BV-based prediction and planar mode.

ITMP fusion may be used with up to two prediction blocks corresponding to the best and second-best TM cost (e.g., best being associated with a highest coding gain or highest level of efficiency associated with a coding process). A TM search process may remain unchanged. The template cost of the two best BV candidates may be compared with a threshold. The cost factor of 1.5 may be applied for ITMP fusion as follows:

$$TM\_cost_2 < 1.5^* TM\_cost_1$$

If the condition is true, another condition may be tested. Fused template cost may be computed, meaning that

Lf = fusion of Template1 and Template2
where Template1 is the template corresponding to the first fusion candidate and Template2 is the template corresponding to the second fusion candidate.
$TM\_cost_{fusion}$ = SAD between current template of the current block and Lf

Final fusion may be performed based on the first condition being true, and based on $TM\_cost_{fusion} < TM\_cost_1$.

Weights of the modes may be computed from their SAD costs as follows:

$$w_1 = TM_{cost_2} / (TM_{cost_1} + TM_{cost_2})$$

$$w_2 = 1 - w_1$$

$$p_{fusion} = \sum_{i=1}^{2} w_i p_i$$

where $p_1$ is the prediction data corresponding to the best match with the lowest TM cost and $p_2$ is the prediction data corresponding to the second-best match with the second-lowest TM cost.

Fusion may be applied if the two conditions are satisfied.

In examples, a fusion method may blend predictors to derive the final prediction block. The predictors may be obtained by using the best BVs obtained in the ITMP search process.

The fusion method may be as follows:

$$p_{fusion} = \sum_{i=0}^{N-1} w_i * p_i + w_N * midValue$$

where $p_{fusion}$ represent the final predicted block, $p_i$ is one of the N best predictors selected for fusion and based on ITMP process. *midValue* = 1 << (*bitDepth* - 1), for 10-bit content midValue is 512. The weights $w_i$ may be derived from candidate matching templates and current template using gaussian solver method used in CCCM.

Usage of the ITMP and ITMP fusion may be signaled with a CU level flag. The new ITMP fusion method may be considered as a sub-mode of ITMP and may be signaled with an ITMP fusion flag.

BV-based prediction may be fused, e.g. obtained with ITMP, and intra prediction, in which the prediction block is the weighted sum of two prediction signals generated by ITMP and intra prediction. ITMP BV may be fused with intra prediction. The prediction block may be the weighted sum of two prediction signals generated by ITMP and intra prediction, in which the intra prediction mode derived by TIMD is used for intra prediction. A CU indication may be signaled to indicate whether fusion is used for the block.

An indication may be used to indicate the number of candidates to be fused (2 or 5). An indication may be signaled to indicate which weight derivation method is used, SAD based or derivation of MSE minimization.

Features described herein may be associated with ITMP fusion. ITMP fusion may be a subset of ITMP mode. If ITMP flag, e.g., intra_tmp_flag, is true, the ITMP flag may further signal a fusion flag to decide whether fusion is applied.

intra_tmp_fusion_flag may indicate whether fusion is used or not for current block.

intra_tmp_fusion_idx may specify the candidate set, e.g. fusion set, used for ITMP fusion. The range of intra_tmp_fusion_idx is 0 to 2, and intra_tmp_fusion_idx may be used to indicate one of the three candidate sets {BV0 to BV4}, {BV5 to BV9}, {BV10 to BV14}.

intra_tmp_fusion_weight_type may indicate whether the SAD based weight derivation or the Wiener-filter based weight derivation is used.

FIG. 9 illustrates an example of the block vector filtering in ITMP fusion. For a fusion set, the SAD-based thresholds may be used to discriminate whether the blocks are combined or not in the fusion set. ITMP fusion method may make 3 fusion sets with the final 19 BVs and, a set (e.g., initially) may have the 5 BVs. For a fusion set, the SAD-based thresholds may be used to discriminate whether the block indicated by a BV will be used or not. The threshold of a fusion set may be calculated as follows:

$$\text{Fusion set 0: } Threshold_{set0} = SAD_{BV0} \ll 1$$

$$\text{Fusion set 1: } Threshold_{set1} = SAD_{BV5} * 1.2$$

$$\text{Fusion set 2: } Threshold_{set2} = SAD_{BV10} * 1.2$$

BVs within a set may be compared with a threshold (e.g., a threshold associated with the set). If TM cost of a BV is larger than the threshold, the BV may not be retained for fusion.

Features described herein may be associated with ITMP fusion. In a fusion workflow, available BVs may be utilized, for example, by testing if some BVs are going to be discarded. BVs that are going to be blended within the fusion may be selected.

For fusion, it may be determined which BVs are to be used in fusion. The number of BVs used in a fusion set may be calculated. For example, in FIG. 6, fusion set 0 may use 3 BVs in fusion, and 2 BVs may be unused and discarded from the consideration. Discarded BVs may be more prominent than BVs that are kept for fusion, e.g., BVs kept in fusion set0 or more prominent than BVs from set1 and/or set2. TM cost may be used to shortlist the number of possible BVs, and the BV being finally used, e.g. in non-fusion mode, may be any of the BVs. BV being used may be decided by the encoder withing the RDO process. Discarding BVs based on the comparison of their TM cost with a threshold may lead to discarding of BVs that may be more relevant for fusion than other BVs. The final selected BV in non-fusion mode may be any of the shortlisted 19 BVs, regardless of its template matching cost. The best fit, e.g., the BV that is finally selected, e.g. in non-fusion mode, may be discarded from the fusion and not tested in the fusion.

In examples, a device (e.g., a video encoding and/or decoding device) may be configured to obtain, for a video block, a block vector (BV) candidate of a first fusion set. The device may compare a template matching (TM) cost of the BV candidate to a threshold associated with a first fusion set. The device may, based on the comparison, determine to bypass the BV candidate from the first fusion set. The device may determine a fused prediction block based on at least one or more of the first fusion set, a second fusion set, or the bypassed BV candidate (e.g., the bypassed BV candidate may be included in the second fusion set) . The device may decode the video block based on the fused prediction block.

In examples, a BV may be selected. After an ITMP BV search process is finished and BVs are compared and sorted based on their template matching (TM) cost, the first 15 BVs may be used in fusion. The BVs may be divided in three sets (e.g., a first fusion set, a second fusion set, and a third fusion set). A set may include up to five BVs, and intra_tmp_fusion_idx may be used to indicate one of the three candidate sets set0 = {BV0 to BV4}, set1 = {BV5 to BV9}, and set2 = {BV10 to BV14}. BVs may be discarded (e.g., bypassed). For example, set0 (e.g., the first fusion set) may use 3 BVs in fusion, and 2 BVs may be unused and discarded (e.g., bypassed) from the fusion, see FIG. 9. BVs that may have been otherwise considered as appropriate prediction candidates (e.g., based on coding efficiency and/or coding gain) may be discarded from fusion. A fused prediction block may be based on at least one or more of the first fusion set, the second fusion set, or the bypassed BV candidate (e.g., the bypassed BV candidate may be included in the second fusion set).

In examples, BVs may be used regardless of TM cost. In examples, BVs may (or may not) be discarded from the fusion set. The comparison of the TM cost with the threshold may be skipped, and all available BVs may be used in the fusion set.

In examples, when the fusion set is not complete, planar, dc, or intra angular mode may be used. In examples, based on BVs being discarded, or a fusion set being incomplete, e.g. there is less than five BVs in a fusion set, modes may be added. For example, if a number of BVs is less than five, missing BVs may be replaced with intra modes such as planar, dc, or intra angular modes. Intra angular modes may be, for example, derived as in TIMD or DIMD. One or more modes may be added.

Features described herein may include conditions for discarding BVs from a fusion set.

An BV selection for fusion sets may be described herein. Conditions for discarding BVs from fusion may be applied. By adding conditions, rules may be imposed when discarding BVs. For example, the BV candidate may be a first BV candidate. The device may obtain, for the video block, a second BV candidate. The device may compare a TM cost of the second BV candidate to the threshold associated with the first fusion set. The device may, based on the TM cost of the second BV candidate being less than the threshold associated with the first fusion set, determine to retain the second BV candidate of the first fusion set for the first fusion set. Bypassing the first BV candidate may be determined based further on the determination to retain the second BV candidate of the first fusion set (e.g., the first BV candidate may be bypassed based on (after) retaining (e.g., determining to retain) the second BV candidate of the first fusion set).

SAD cost (e.g., TM cost) of a BV is compared with the threshold as follows. The SAD-based thresholds may be used to discriminate whether the block indicated by a BV is used. The threshold of a (e.g., first) fusion set may be calculated as below:

$$\text{Fusion set 0: } Threshold_{set0} = SAD_{BV0} * a$$

$$\text{Fusion set 1: } Threshold_{set1} = SAD_{BV5} * b$$

$$\text{Fusion set 2: } Threshold_{set2} = SAD_{BV10} * c$$

In examples, a=2, b=1.2, and c=1.2. BVs within a set may be compared with a threshold (e.g., the appropriate threshold for the set). If TM cost of a BV is larger than the threshold, the BV may not be retained for fusion.

Including thresholds, conditions may be used to decide if BVs are retained within the fusion sets. A cross-fusion-set may be compared. Based on taking a decision to keep or discard BV from fusion set, a TM cost of BVs from (e.g., other) fusion sets may be taken into consideration. Decision-making rules may be used when discarding BVs. In examples, it may be less likely that (e.g., prominent) BVs will be discarded from fusion.

A (e.g., second) set of thresholds include be given with:

Fusion set 0: not defined

$$\text{Fusion set 1: } Threshold2_{set1} = SAD_{BV4} * b2$$

$$\text{Fusion set 2: } Threshold2_{set2} = SAD_{BV9} * c2$$

For example, b2=1.4 and c2=1.4.. BVs within a set may be compared with the appropriate threshold. If TM cost of a BV is larger than the threshold, the BV may not be retained for fusion.

A (e.g., third) set of thresholds may include the following:

$$\text{Fusion set 0: } Threshold3_{set0} = SAD_{BV5} * a3$$

$$\text{Fusion set 1: } Threshold3_{set1} = SAD_{BV10} * b3$$

$$\text{Fusion set 2: } Threshold3_{set2} = SAD_{BV15} * c3$$

For example, a2=0.5, b2=0.5, and c2=0.5. BVs within a set may be compared with the appropriate threshold. If TM cost of a BV is smaller than the threshold, BV may not be retained for fusion.

When making decisions, at least one of the thresholds may be compared with a TM (e.g., TM cost) of a BV. A TM cost may be compared with a threshold and a decision to keep the BV may (or may not) be taken. A cross-set decision may be considered based on the TM cost of the BVs from other sets.

A starting index of the fusion sets may be shifted, and thresholds may be modified.

BVs may be used without truly discarding them. Comparison with a threshold may be used as before, and BVs that are not retained in a fusion set may be transferred to another fusion set.

In an example shown in FIG. 9, fusion set0 may use 3 BVs in fusion and 2 BVs may be unused and discarded from the fusion. BVs (e.g., prominent BVs) may be discarded. An adaptive and variable fusion set size may be used, as described herein.

A number of BVs used in the set0 may be determined. For example, the number of BVs may be based on the comparison of the TM cost with a threshold. The threshold may be, e.g., $Threshold_{set0} = SAD_{BV0} * a$. The number of BVs used in set0 may be given with tmpFusionNum0. For example, there may be 5 BVs in set0, however tmpFusionNum0 may be updated accordingly based on how many BVs are retained for fusion in fusion set0. In examples, tmpFusionNum0 may be 3, as 3 BVs may be used in set0. Set0 may be determined, and after retaining the number of BVs that are to be retained, set0 may be as follows: set0={BV0, BV1, BV2}.

If all BVs that are initially added in set0 are retained for fusion, nothing may be changed, for example, for the next fusion set, e.g. fusion set1.

If at least one BV is not retained in set0, the following set, e.g. fusion set1, may be updated with BVs that were initially added in set0 and are not retained for fusion. The device may add the BV candidate bypassed from the first fusion set (e.g., set0) to the second fusion set (e.g., set1), and the fused prediction block may be determined based on at least one or more of the first fusion set, or the second fusion set having the BV candidate bypassed from the first fusion set.

Based on the determination to bypass the BV candidate from the first fusion set, the device may determine a threshold associated with the second fusion set based on the TM cost associated with the BV candidate bypassed from the first fusion set. The device may compare a third BV candidate to the threshold associated with the second fusion set. The device may determine to retain the third BV candidate for the second fusion set based on the comparison. The fused prediction block may be determined based on at least one or more of the first fusion set ,or the second fusion set having the third BV candidate.

Based on the determination to bypass the BV candidate from the first fusion set, the device may determine a threshold associated with the second fusion set based on the TM cost associated with the BV candidate bypassed from the first fusion set. The device may compare a third BV candidate to the threshold associated with the second fusion set. The device may determine to bypass the third BV candidate for the second fusion set based on the comparison. The fused prediction block may be determined based on the first fusion set and the second fusion set having the third BV candidate bypassed from the second fusion set.

BVs that are not retained may be transferred to the next set, e.g., fusion set1. Modified fusion set1 may become set1={BV3 to BV9}. tmpFusionNum1 is 7 (e.g., after modifying set1 with BVs from previous set). Threshold for set1 may be modified. Set1 may use a modified threshold based on the first BV from the modified set, e.g., set1 may become $Threshold_{set1} = SAD_{BV3} * b$ since BV3 is the first BV in the modified fusion set1. BVs from set1 may be compared with the threshold. BVs may (or may not) be retained in the fusion set after comparison. TmpFusionNum1 may be updated based on how many BVs are retained in set1 after comparison.

In examples, processes (e.g., at least associated with a threshold or determining a BV candidate) that are applied to set 1 (as described herein) may also be applied for the next fusion set, e.g. fusion set2. If BVs are retained in set1, nothing may be changed, for example, for set2. If BVs are not retained in set1, fusion set2 may be updated as for fusion set1.

In an example, a maximum size of a fusion set (e.g., the first/second/third) fusion set may be M. For example, up to M BVs may be used in fusion set. For example, the device may determine to bypass a BV candidate from the second fusion set based on the maximum size of the second fusion set. The device may determine to add the BV candidate bypassed from the second fusion set to a third fusion set. The fused prediction block may be based further on the third fusion set having the BV candidate bypassed from the second fusion set.

If an initial set size is larger than M, M BVs may be retained in a fusion set. The BVs that are not retained (e.g., due to maximum allowed number of BVs in fusion set) may be transferred to a next fusion set, as described herein.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method for video decoding, the method comprising:

   obtaining, for a video block, a block vector (BV) candidate of a first fusion set;
   comparing a template matching (TM) cost of the BV candidate to a threshold associated with the first fusion set;
   based on the comparison, determining to bypass the BV candidate from the first fusion set;
   determining a fused prediction block based on the first fusion set, a second fusion set, and the bypassed BV candidate; and
   decoding the video block based on the fused prediction block.

2. The method of claim 1, wherein the BV candidate is a first BV candidate, and wherein the method further comprises:

   obtaining, for the video block, a second BV candidate;
   comparing a TM cost of the second BV candidate to the threshold associated with the first fusion set; and
   based on the TM cost of the second BV candidate being less than the threshold associated with the first fusion set, determining to retain the second BV candidate of the first fusion set for the first fusion set, wherein bypassing the first BV candidate is determined based further on the determination to retain the second BV candidate of the first fusion set.

3. The method of any of claims 1 or 2, wherein the method further comprises:
   adding the BV candidate bypassed from the first fusion set to the second fusion set, wherein the fused prediction block is determined based on the first fusion set and the second fusion set having the BV candidate bypassed from the first fusion set.

4. The method of any of claims 1-3, wherein the method further comprises:

   based on the determination to bypass the BV candidate from the first fusion set, determining a threshold associated with the second fusion set based on the TM cost associated with the BV candidate bypassed from the first fusion set;
   comparing a third BV candidate to the threshold associated with the second fusion set; and
   determining to retain the third BV candidate for the second fusion set based on the comparison, wherein the fused prediction block is determined based on the first fusion set and the second fusion set having the third BV candidate.

**5.** The method of any of claims 1-3, wherein the method further comprises:

based on the determination to bypass the BV candidate from the first fusion set, determining a threshold associated with the second fusion set based on the TM cost associated with the BV candidate bypassed from the first fusion set;

comparing a third BV candidate to the threshold associated with the second fusion set; and

determining to bypass the third BV candidate for the second fusion set based on the comparison, wherein the fused prediction block is determined based on the first fusion set and the second fusion set having the third BV candidate bypassed from the second fusion set.

**6.** The method of any of claims 1-5, wherein the method further comprises:

determining a maximum size of the first fusion set, wherein the determination to bypass the BV candidate from the first fusion set is based further on the maximum size of the first fusion set.

**7.** The method of any of claims 1-6, wherein the method further comprises:

determining a maximum size of the second fusion set;

determining to bypass a BV candidate from the second fusion set based on the maximum size of the second fusion set; and

determining to add the BV candidate bypassed from the second fusion set to a third fusion set, wherein the fused prediction block is based further on the third fusion set having the BV candidate bypassed from the second fusion set.

**8.** The method of any of claims 1-6, wherein the method further comprises:

selecting a fusion set based on a received indication indicating the selected fusion set, wherein the selected fusion set is selected among the first fusion set, the second fusion set, or a third fusion set, and wherein the fused prediction block is determined based on the indication.

**9.** A method for video encoding, the method comprising:

obtaining, for a video block, a block vector (BV) candidate of a first fusion set;

comparing a template matching (TM) cost of the BV candidate to a threshold associated with the first fusion set;

based on the comparison, determining to bypass the BV candidate from the first fusion set;

determining a fused prediction block based on the first fusion set, a second fusion set, and the bypassed BV candidate; and

encoding the video block based on the fused prediction block.

**10.** The method of claim 9, wherein the BV candidate is a first BV candidate, and wherein the method further comprises:

obtaining, for the video block, a second BV candidate;

comparing a TM cost of the second BV candidate to the threshold associated with the first fusion set; and

based on the TM cost of the second BV candidate being less than the threshold associated with the first fusion set, determining to retain the second BV candidate of the first fusion set for the first fusion set, wherein bypassing the first BV candidate is determined based further on the determination to retain the second BV candidate of the first fusion set.

**11.** The method of any of claims 9 or 10, wherein the method further comprises:

adding the BV candidate bypassed from the first fusion set to the second fusion set, wherein the fused prediction block is determined based on the first fusion set and the second fusion set having the BV candidate bypassed from the first fusion set.

**12.** The method of any of claims 9-11, wherein the method further comprises:

based on the determination to bypass the BV candidate from the first fusion set, determining a threshold associated with the second fusion set based on the TM cost associated with the BV candidate bypassed from the first fusion set;

comparing a third BV candidate to the threshold associated with the second fusion set; and

determining to retain the third BV candidate for the second fusion set based on the comparison, wherein the fused prediction block is determined based on the first fusion set and the second fusion set having the third BV candidate.

13. The method of any of claims 9-11, wherein the method further comprises:

based on the determination to bypass the BV candidate from the first fusion set, determining a threshold associated with the second fusion set based on the TM cost associated with the BV candidate bypassed from the first fusion set;

comparing a third BV candidate to the threshold associated with the second fusion set; and

determining to bypass the third BV candidate for the second fusion set based on the comparison, wherein the fused prediction block is determined based on the first fusion set and the second fusion set having the third BV candidate bypassed from the second fusion set.

14. The method of any of claims 9-13, wherein the method further comprises:
determining a maximum size of the first fusion set, wherein the determination to bypass the BV candidate from the first fusion set is based further on the maximum size of the first fusion set.

15. The method of any of claims 9-14, wherein the method further comprises:

determining a maximum size of the second fusion set;

determining to bypass a BV candidate from the second fusion set based on the maximum size of the second fusion set; and

determining to add the BV candidate bypassed from the second fusion set to a third fusion set, wherein the fused prediction block is based further on the third fusion set having the BV candidate bypassed from the second fusion set.

**FIG. 1**

**FIG. 2**

EP 4 773 598 A1

**FIG. 3**

R1

R6

R4

R5

R3

R2

2*max(5W, 64)

max(5H, 64)

W

H

W

H

H

H

**FIG. 4**

Sparse search example       refinement search example

FIG. 5

ITMP PROCESS
STANDARD+MERGE candidates
Integer-pel TM only
30 candidates in refinement

→ TM COST RANKING
30 INTEGER candidates are selected

→ REFINEMENT PROCESS

→ TM COST RANKING
19 INTEGER candidates are selected

**FIG. 6**

FIG. 7

FIG. 8

**Fusion set0**

| Index | BV | SAD |
|---|---|---|
| 0 | $BV_0$ | 969 |
| 1 | $BV_1$ | 1153 |
| 2 | $BV_2$ | 1606 |
| 3 (unused) | $BV_3$ | 1975 |
| 4 (unused) | $BV_4$ | 2160 |

**Fusion set1**

| Index | BV | SAD |
|---|---|---|
| 5 | $BV_5$ | 2250 |
| 6 | $BV_6$ | 2278 |
| 7 | $BV_7$ | 2410 |
| 8 | $BV_8$ | 2496 |
| 9 | $BV_9$ | 2570 |

**Fusion set2**

| Index | BV | SAD |
|---|---|---|
| 10 | $BV_{10}$ | 2635 |
| 11 | $BV_{11}$ | 2834 |
| 12 | $BV_{12}$ | 2887 |
| 13 | $BV_{13}$ | 3140 |
| 14 (unused) | $BV_{14}$ | 3299 |

**Calculate fusionNum using SAD-based threshold**

**Fusion information for set0**
- fusionNum: 3
- Fusion BVs: $\{BV_0, BV_1, BV_2\}$

**Fusion information for set1**
- fusionNum: 5
- Fusion BVs: $\{BV_5, BV_6, BV_7, BV_8, BV_9\}$

**Fusion information for set2**
- fusionNum: 4
- Fusion BVs: $\{BV_{10}, BV_{11}, BV_{12}, BV_{13}\}$

**FIG. 9**

Europäisches
Patentamt
European
Patent Office
Office européen
des brevets

# EUROPEAN SEARCH REPORT

**Application Number**

EP 25 30 5005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM S ET AL:  "AhG12: Fix on BV Filtering for IntraTMP Fusion", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0131 10 April 2024 (2024-04-10), XP030317443, Retrieved from the Internet: URL:https://jvet-experts.org/doc_end_user/ documents/34_Rennes/wg11/JVET-AH0131-v1.zi p JVET-AH0131-v1.docx [retrieved on 2024-04-10] * the whole document *<br>----- | 1-15 | INV. H04N19/105 H04N19/176 H04N19/52 H04N19/593 |
| X | WANG (OPPO) F ET AL:  "EE2-1.20i/j: Combination of IntraTMP tests", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0086 ; m62715 24 April 2023 (2023-04-24), XP030308701, Retrieved from the Internet: URL:https://jvet-experts.org/doc_end_user/ documents/30_Antalya/wg11/JVET-AD0086-v4.z ip JVET-AD0086-v4.docx [retrieved on 2023-04-24] * the whole document *<br>----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 6 June 2025 | Cordara, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)